# NEUE EUROPÄISCHE PATENTSCHRIFT

(11) **EP 1 301 445 B2**
(45) Veröffentlichungstag und Bekanntmachung des Hinweises auf die Entscheidung über den Einspruch: **23.07.2008**
(45) Hinweis auf die Patenterteilung: 16.06.2004
(21) Anmeldenummer: 01967156.9
(22) Anmeldetag: 12.07.2001
(51) Int. Cl.: C03C 3/087, C03C 3/085, C03C 3/091, C03C 3/093

(54) **VERFAHREN ZUR HERSTELLUNG VON ALUMINOSILICATGLÄSERN**
METHOD FOR PRODUCING ALUMINOSILICATE GLASS
PROCEDE DE PRODUCTION DE VERRES D'ALUMINOSILICATE

(30) Priorität: 19.07.2000 DE 10034985
(43) Veröffentlichungstag der Anmeldung: 16.04.2003
(73) Patentinhaber: Schott AG, 55122 Mainz (DE)
(72) Erfinder: NAUMANN, Karin, 55270 Ober-Olm (DE); OTT, Franz, 95666 Mitterteich (DE); DIEZEL, Ralf, 95666 Mitterteich (DE); BECKER, Otmar, 63225 Langen (DE)
(86) Internationale Anmeldenummer: PCT/EP2001/008036
(87) Internationale Veröffentlichungsnummer: WO 2002/006172

(56) Entgegenhaltungen:
- EP-A- 0 805 125
- EP-A- 0 913 365
- EP-A- 1 044 932
- EP-A- 1 078 889
- WO-A-99/14794
- DE-A- 10 006 305
- DE-A- 19 851 927
- DE-A- 19 939 771
- DE-A- 19 939 789
- DE-C- 10 000 839
- DE-C- 19 603 698
- DE-C1- 19 603 698
- DE-C1- 19 617 344
- DE-C1- 19 747 354
- DE-C1- 19 758 481
- DE-C1- 19 942 259
- JP-A- 10 114 538
- JP-A- 10 139 467
- JP-A- 11 043 350
- JP-A- 2000 239 023
- US-A- 5 770 535

## Beschreibung

Die Erfindung betrifft ein Verfahren zur Herstellung von Aluminosilicatgläsern. unter Zusatz eines Läutermittels zur Gemengezubereitung. Die Erfindung betrifft auch die Gläser, die das Läutermittel enthalten, sowie Verwendungen der Gläser.

Verfahren zur Herstellung von Gläsern bestehen aus den Verfahrensschritten, Gemengezubereitung, auch Gemengeeinlegen genannt, Schmelzen des Glases und dessen anschließende Heißformgebung. Unter den Begriff Schmelzen sind hier auch die sich an das Einschmelzen anschließenden Schritte Läutern, Homogenisieren und Konditionieren zur weiteren Verarbeitung zusammengefaßt.

Unter Läuterung versteht man in Bezug auf Schmelzen die Entfernung von Gasblasen aus der Schmelze. Um höchste Fremdgas- und Blasenfreiheit zu erzielen, bedarf es der gründlichen Durchmischung und Entgasung des geschmolzenen Gemenges. Das Verhalten von Gasen bzw. Blasen in der Glasschmelze sowie deren Entfernung sind beispielsweise in "Glastechnische Fabrikationsfehler", herausgegeben von H. Jebsen-Marwedel und R. Brückner, 3. Auflage, 1980, Springer-Verlag, Seite 195 ff. beschrieben.

Es sind allgemein zwei prinzipiell verschiedene Läuterverfahren bekannt, die sich im wesentlichen durch die Art der Läutergaserzeugung unterscheiden:

Bei der mechanischen Läuterung werden durch Öffnungen im Boden des Schmelzaggregats Gase, z. B. Wasserdampf, Sauerstoff, Stickstoff oder Luft, eingepreßt. Dies ist das sogenannte "bubbling"-Verfahren.

Am häufigsten sind die chemischen Läuterverfahren .

Ihr Prinzip besteht darin, daß der Schmelze bzw. bereits dem Gemenge
a) Verbindungen zugesetzt werden, die in einer Gleichgewichtsreaktion bei höheren Temperaturen Gase abgeben, oder
b) Verbindungen zugesetzt werden, die bei höheren Temperaturen flüchtig sind, oder
c) Verbindungen zugesetzt werden, die sich in der Schmelze zersetzen und dabei Gase freisetzen.
Dadurch wird das Volumen vorhandener Blasen vergrößert und deren Auftrieb verstärkt.

Die erstgenannte Gruppe von Verbindungen umfaßt die sogenannten Redox-Läutermittel wie beispielsweise Antimonoxid, Arsenoxid. Bei diesem in der Praxis am häufigsten eingesetzten Verfahren werden als Redox-Läutermittel polyvalente Ionen eingesetzt, die in mindestens zwei Oxidationsstufen auftreten können, welche in einem temperaturabhängigen Gleichgewicht untereinander stehen, wobei bei hohen Temperaturen ein Gas, meistens Sauerstoff, freigesetzt wird.

Zu der zweiten Gruppe, den Verbindungen, die bei hohen Temperaturen aufgrund ihres Dampfdruckes flüchtig sind und dadurch wirken, gehören z. B. Natriumchlorid und verschiedene Fluoride. Sie werden unter dem Begriff Verdampfungsläutermittel zusammengefaßt.

Zur letztgenannten Art der chemischen Läuterung, also der Läuterung mittels Verbindungen, die sich zersetzen und dabei Gase freisetzen, hier Zersetzungsläutermittel genannt, gehört die Sulfat-Läuterung. Sie ist bekannt für niedrigschmelzende Gläser, so für Kalk-Natron-Gläser, da das üblicherweise eingesetzte Na₂SO₄ (bei Massengläsern auch als Glaubersalz Na₂SO₄ 10 H₂O) mit dem stets vorhandenen SiO₂ schon bei, verglichen mit dem alleine relativ stabilen Na₂SO₄, tiefen Temperaturen gemäß

Na₂SO₄ + SiO₂ → Na₂O · SiO₂ + SO₂ + ½ O₂

bzw. gemäß

Na₂SO₄ + Na₂S + SiO₂ → 2 Na₂O · SiO₂ + SO₂ + S

reagiert.

Die genannten Redox-Läutermittel Sb₂O₃ und As₂O₃ werden schon aus Umweltschutzgründen ungern verwendet.
Außerdem sind sie für die Läuterung von Gläsern, die als Kolbengläser für Halogenlampen verwendet werden sollen, ungeeignet, da sie leicht reduzierbar sind und bei der Heißverarbeitung in der Flamme die Verquetschung, d. h. die Verschmelzung zwischen Glas und Stromzuführungsdrähten durch die Reduktion des Antimonoxids oder Arsenoxids braun verfärbt wird. Auch fördert insbesondere Sb₂O₃, zumindest in höheren Anteilen, die unerwünschte Schwarzfärbung auf der Kolbeninnenseite, die von Wolfram-Abscheidungen aufgrund von Störungen des Halogenkreislaufs herrührt.

Auch für die Läuterung von auf einer Floatanlage hergestellten Flachgläsern sind As₂O₃ und Sb₂O₃ ungeeignet, da sie auf dem Floatbad unter den dort herrschenden reduzierenden Bedingungen zum elementaren As bzw. Sb reduziert würden. Ein alternatives Redox-Läutermittel ist CeO₂. Es ist jedoch relativ teuer und kann, insbesondere bei höheren Gehalten, zu unerwünschten Fluoreszenserscheinungen im Glas und zur Gelbfärbung des Glases führen.

Die Redox-Läuterung ist an die Temperaturen gebunden, bei denen aufgrund der thermodynamischen Gegebenheiten die entsprechenden Redoxprozesse ablaufen. Für viele Glasschmelzen wie die Schmelzen von Kalk-Natron-Gläsern und anderen relativ niedrig schmelzenden Gläser (z. B. Boratgläser, Bleigläser) reichen diese Möglichkeiten aus.

Jedoch bilden sich bei Gläsern mit Schmelztemperaturen (Temperatur bei der Viskosität ca. 10² dPas) zwischen ca. 1550 °C und 1650 °C, was für eine ausreichende Läuterung Läutertemperaturen von mehr als 1600°C bedeutet, aufgrund erhöhter Viskosität der Glasschmelze die Blasen schlechter. Ihre Wachstumsneigung ist geringer, und sie steigen schlechter auf als bei niedrigeren Viskositäten. So kommt es zur Bildung feiner Blasen, die auch durch Durchsatzreduzierung oder durch höhere Temperaturen nur sehr schwer oder gar nicht mehr entfernbar sind, was solche Gläser unbrauchbar macht. Denn die Resorptionswirkung mancher chemischer Redox-Läutermittel, z. B. des Sb₂O₃, d. h. die Fähigkeit beim Abkühlen den Sauerstoff oder andere Gase aus den feinen Blasen zu resorbieren und damit zu entfernen, reicht bei vielen hochschmelzenden Gläsern nicht aus.

Die prinzipiell in gewissem Rahmen vorhandenen Möglichkeiten der Erhöhung der Temperaturen zur Viskositätserniedrigung sowie der Verlängerung der Schmelz- und Läuterzeiten sind außerdem nicht wirtschaftlich, weil z. B. durch die letztgenannte Maßnahme die Schmelzleistungen zu niedrig würden.

Zu den genannten hochschmelzenden Gläsern gehören vor allem Alurninosilicatgläser, d. h. Silicatgläser mit wenigstens 10 Gew.-% Al₂O₃, insbesondere alkalifreie Aluminosilicatgläser, insbesondere Aluminosilicatgläser mit wenig oder keinem B₂O₃-Anteil, insbesondere solche mit relativ hohem BaO-Anteil, insbesondere Aluminosilicatgläser, wie sie aufgrund ihrer mit den hohen Schmelztemperaturen einhergehenden hohen Temperaturbeständigkeit als Substratgläser, beispielsweise in der Displaytechnik, oder insbesondere als Lampengläser, beispielsweise für Halogenlampen eingesetzt werden.

Ein weiteres Redox-Läutermittel ist SnO₂, das gemäß der Reaktionsgleichung

SnO₂ → SnO + ½ O₂

Läuterglas bildet. In eine so entstandene O₂-Blase diffundieren in der Schmelze gelöste Gase wie CO₂ ein. Die Blasen, die groß genug sind, gelangen durch Auftrieb an die Glasoberfläche, wo das Gas aus der Schmelze abgegeben wird. Kleine Blasen befinden sich auch nach dem Läuterprozeß noch in der Schmelze. Bei Temperaturerniedrigung bildet sich wieder das höherwertige Zinnoxid und nimmt dabei aus den noch vorhandenen Blasen gemäß

SnO₂ + ½ O₂ → SnO₂

Sauerstoff auf: Es handelt sich also um eine Resorption.

SnO₂ ist ein guter Keimbildner und fördert die Kristallisation, so daß es bei Verwendung des Läutermittels SnO₂ leicht zu kristallbedingten Glasfehlern und zu Ausscheidungen von Cassiterit-Phasen kommt.

Aus der Patentliteratur sind bereits aluminiumhaltige Gläser bekannt, die, teilweise neben anderen Läutermitteln, auch SnO₂ enthalten.

So beschreibt JP 10-130034 A Aluminoborosilicatgläser, die neben SnO₂ zwingend As₂O₂ enthalten, während JP 10-114538 A Aluminoborosilicatgläser beschreibt, die neben SnO₂ zwingend Sb₂O₃ enthalten.

JP 11-43350 A beschreibt Aluminoborosilicatgläser, die neben SnO₂ zwingend Sb₂O₃ und Cl₂ enthalten. JP 10-324526 A beschreibt Aluminoborosilicatgläser, denen eine Komponente aus der Gruppe Fe₂O₃, Sb₂O₃, SnO₂, SO₃ und eine aus der Gruppe Cl, F zugesetzt wird und die immer noch einen Anteil As₂O₃ enthalten.

JP 10-139 467 A beschreibt Aluminoborosilicatgläser, die 0,1 bis 20 mol-% von SnO₂ und/oder TiO₂ und/oder ZrO₂ enthalten.

JP 10-59741 A beschreibt SnO₂-haltige Aluminoborosilicatgläser, die wie die Gläser der anderen genannten Schriften in ihrer Zusammensetzung in einem relativ weiten Bereich variieren können.

Auch aus den Veröffentlichungen DE 196 03 698 C1, DE 196 17 344 C1, DE 196 01 922 A1 und DE 197 39 912 C1 der Anmelderin sind bereits SnO₂-haltige Aluminoborosilicatgläser bekannt.

All diesen Gläsern ist gemeinsam, daß sie hoch B₂O₃-haltig sind, wodurch die Schmelztemperatur herabgesetzt wird.

Dadurch kann vermieden werden, daß das bei der Läuterung entstehende Sn²⁺ weiter zum Metall reduziert wird, denn hohe Temperaturen würden die niedrigen Oxidationsstufen polyvalenter Ionen stärker stabilisieren. Elementares Sn würde zur Legierungsbildung an den Elektroden der Schmelzwanne führen.

Der Erfindung liegt nun die Aufgabe zugrunde, ein Verfahren zur Herstellung von Aluminosilicatgläsem bereitzustellen, bei dem die Glasschmelze effektiv geläutert wird, d. h. bei dem Glas mit hoher Qualität bzgl. Blasenfreiheit bzw. -armut resultiert, das eine Läuterung der Glasschmelzen, insbesondere von bei hohen Temperaturen schmelzenden Gläser ermöglicht.

Die Aufgabe wird durch das Verfahren gemäß Patentanspruch 1 und Patentanspruch 2 gelöst.

In dem Verfahren zur Herstellung eines alkalifreien Aluminosilicatglases mit den Verfahrensschritten Gemengezubereitung, Schmelzen des Glases und anschließende Heißformgebung, wobei unter dem Begriff Schmelzen neben dem Aufschmelzen der Rohstoffe und Scherben auch die sich anschließenden Schritte Läutern und Homogenisieren zusammengefaßt sind, wird dem Gemenge wenigstens ein Läutermittel, und zwar zwischen 0,05 Gew.-% und 1,0 Gew.-% SnO₂ zugesetzt.

Bevorzugt ist ein Zusatz von 0,1 bis 0,5 Gew.-% SnO₂.

Das Zinnoxid wird dabei als vierwertiges Zinndioxid SnO₂ eingesetzt, das durch Nitratzugaben im Gemenge in dieser Oxidationsstufe gehalten wird: Bei den hohen Temperaturen im Läuterteil der Schmelzwanne gehen die Zinnionen teilweise in. den zweiwertigen Zustand über, wobei die gebildeten Sauerstbffblasen aufsteigen und damit zur Läuterung beitragen, indem in der Schmelze gelöste Gase in diese Blasen eindiffundieren und somit aus dem Glas entfernt werden. Nicht aufgestiegene, sehr kleine Blasen werden am Ende der Läuterungsphase, der sogenannten Abstehphase, also bei niedrigen Temperaturen, durch das nun vorhandene Zinnmonoxid SnO wieder resorbiert, welches dabei zu SnO₂ oxidiert wird.

Das Nitrat zur Stabilisierung der vierwertigen Zinn-Ionen kann über verschiedene Glaskomponenten eingebracht werden: z. B. als Ba(NO₃)₂, Mg(NO₃)₂, Ca(NO₃)₂, Al(NO₃)₃ o. ä..

Das erfindungsgemäße Verfahren gemäß Anspruch 1 und 2 dient der Herstellung von Aluminosilicatgläsem.

Das erfindungsgemäße Verfahren dient der Herstellung von Gläsern, die bis auf übliche Verunreinigungen frei von Alkalioxiden sind. Der Anteil an Verunreinigungen kann durch die Verwendung alkaliarmer Rohstoffe sowie durch saubere Bedingungen bei der Gemengezubereitung und im Einlegeteil der Schmelzwanne niedrig gehalten werden. So soll unter alkalifrei hier ein Alkalioxidgehalt von maximal 0,1 Gew.-% verstanden werden.

Das Verfahren ist besonders geeignet für die Herstellung von Aluminosilicatgläsern mit Schmelztemperaturen > 1650 °C.

Das Verfahren dient insbesondere der Herstellung von Aluminosilicatgläsern mit thermischen Ausdehnungskoeffzienten α_{20/300} < 7,5 · 10⁻⁶/K, meist Gläsern, die hohe Al₂O₃-Gehalte aufweisen, was zu einer Erhöhung der Schmelz- und Läuterungstemperatur führt.

Das Verfahren dient insbesondere der Herstellung von sogenannten Hartgläsern, d. h. Gläsern mit hohen Transformationstemperaturen Tg (> 600 °C) und niedriger thermischer Dehnung (α_{20/300} < 5,5 · 10⁻⁶/K).

Das erfindungsgemäße Verfahren dient damit insbesondere der Herstellung von Gläsern, die sowohl als Substratgläser für die Displaytechnik und für die Photovoltaik als auch als Lampenkolbengläser für Halogenlampen geeignet sind.

Der Fachmann weiß den Verfahrensschritt der Gemengezubereitung mit geeigneten Rohstoffen so durchzuführen, daß ein Glas der genannten Zusammensetzung erhalten wird. So besitzt P₂O₅, wie bekannt ist, eine hohe Flüchtigkeit, so daß bis zu 20 % beim Einschmelzen des Glases verdampfen können, was er bei der Gemengezubereitung berücksichtigen wird.

Dabei sind Gläser aus dem Zusammensetzungsbereich (in Gew.-% auf Oxidbasis)
SiO₂ 59 - 62, Al₂O₃ 13,5 - 15,5, B₂O₃ 3 - < 5, MgO 2,5 - 5, CaO 8,2 - 10,5, BaO 8,5 - 9,5, ZrO₂ 0 - 1,5, TiO₂ 0 - 0,5, SnO₂ 0,05 - 1.
vor allem als Kolbengläser für Halogenlampen mit Kolbentemperaturen von maximal 660°C geeignet, während Gläser aus dem Zusammensetzungsbereich (in Gew.-% auf Oxidbasis)
SiO₂> 58 - 62; Al₂O₃ 14 - 17,5, bevorzugt 15 -17,5; B₂O₃ 0,2 - 0,7; MgO 0 - 7, bevorzugt 0 - < 1; CaO 5,5 - 14; SrO 0 - 8; BaO 6 - 17, bevorzugt 6 - 10; ZrO₂0 - 1,5, bevorzugt 0,05 - 1; TiO₂ 0 - 0,5, SnO₂ 0,05 - 1. für Halogenlampen mit Kolbentemperaturen von mehr als 660°C geeignet sind.

Die nach dem erfindungsgemäßen Verfahren hergestellten Gläser sind MoO₃- frei und können weiter folgende polyvalente Verbindungen enthalten: bis zu 2 Gew.-% WO₃, bis zu 0,6 Gew.-% CeO₂, bis zu 0,2 Gew.-% MnO₂, bis zu 0,5 Gew.-% Fe₂O₃, und bis zu 0,2 Gew.-% V₂O₅. Die Summe dieser Komponenten soll dabei zwischen 0 und 3 Gew.-% betragen.

Wie bereits bei SnO₂ erläutert, können die Verbindungen im Glas in unterschiedlichen Oxidationsstufen vorliegen, ihr Gehalt ist aber, wie auch beim SnO₂, jeweils auf die genannte Oxidationsstufe umgerechnet angegeben.

Es ist von besonderem Vorteil, daß bei dem erfindungsgemäßen Verfahren keine Verdampfungsläutermittel wie Chloride und Fluoride eingesetzt werden. Für eine wirksame Läuterung wären aufgrund der hohen Löslichkeit im Glas, insbesondere der Fluoride, so große Mengen nötig, daß die physikalischen und chemischen Eigenschaften der Gläser dahingehend verändert würden, daß deren thermische Belastbarkeit und Viskosität zu stark erniedrigt würden. Bei Cl⁻-haltigen Borosilicatgläsern könnten bei Wiedererwärmung wie Verschmelzungen weiße Beläge, sogenannte Lampenringe, auftreten.

Es ist von besonderem Vorteil, daß bei dem erfindungsgemäßen Verfahren auf Zersetzungsläutermittel verzichtet werden kann.

Es ist von besonderem Vorteil, daß mit dem erfindungsgemäßen Verfahren Gläser hergestellt werden können, die bis auf unvermeidliche Verunreinigungen frei von leicht reduzierbaren Bestandteilen, insbesondere von As₂O₃, Sb₂O₃, CdO, PbO, Bi₂O₃ sind. Der Verzicht auf diese Komponenten ist nicht nur aus Gründen des Umweltschutzes vorteilhaft, sondern ermöglicht auch beim erfindungsgemäßen Verfahren eine Heißformgebung auf einer Flöatanlage, beispielsweise für die Herstellung von Substraten für die Displaytechnik oder die Photovoltaik.

Besonders vorteilhaft ist das erfindungsgemäße Verfahren für die Herstellung von alkalifreien Halogenlampengläsern, die aufgrund ihrer nötigen hohen Temperaturbeständigkeit hohe Schmelztemperaturen aufweisen. Hier kann es die Läuterung mittels Sb₂O₃ vollständig ersetzen.

Bei gemäß dem Verfahren hergestellten Halogenlampengläsern ist auch bei den genannten hohen Betriebstemperaturen der Lampe und nach längerem Gebrauch der Lampe die Schwarzfärbung der Kolbeninnenseite, die durch W-Abscheidung als Folge von Störungen des Halogenkreislaufes auftritt, verringert, d. h. der regenerative Halogenkreislauf in der Lampe kann länger als bei Sb₂O₃geläuterten Gläsern aufrechterhalten werden. Auch eine Braunfärbung der Verquetschung bei der Heißverarbeitung in der Flamme tritt nicht auf.

Unter den genannten Verfahrensschritt der Heißformgebung fallen nicht nur das Floaten und der Rohrzug, sondern die verschiedensten üblichen Methoden der Heißformgebung wie Ziehen, zu Rohren oder zu Bändern, oder Floaten oder Walzen, Gießen, Blasen, Pressen, wie sie je nach Verwendungszweck der hergestellten Gläser, Flach- oder Hohlgläser, angebracht sind. Auch hier ist der Fachmann leicht in der Lage, die geeignete Glaszusammensetzung auszuwählen und entsprechend die Parameter des Verfahrensschrittes Heißformgebung zu wählen.

Der erfindungswesentliche Schritt des erfindungsgemäßen Herstellverfahrens, die Zugabe der genannten Menge SnO₂, bewirkt eine sehr effektive Läuterung, was sich in der hervorragenden Glasqualität, d. h. Blasenarmut der hergestellten Gläser manifestiert.

Völlig unerwarteterweise und entgegen allen bisherigen Erfahrungen auf dem Gebiet der Herstellung hochschmelzender Gläser ist das erfindungsgemäße Verfahren hervorragend geeignet für die Herstellung hochschmelzender alkalifreier borarmer oder -freier Aluminosilicatgläser.

Überraschenderweise können diese Gläser mit Schmelztemperaturen > 1650 °C gemäß dem erfindungsgemäßen Verfahren hergestellt werden, ohne daß es zur Reduktion der Zinnionen zum elementaren Zinn kommt.

Die hergestellten Gläser sind frei von Kristallisationsfehlern. Es wird eine hervorragende, für Lampenkolbengläser spezifikationsgerechte Glasqualität erzielt.

Es tritt keine Legierungsbildung an den Pt-Elektroden auf, es kommt nicht zur Pt-Elektroden-Korrosion.

So enthält das erfindungsgemäße Verfahren eine effektive und kostengünstige Läuterung der Gläser. Besonders Glasschmelzen, die bei den üblichen Läutertemperaturen eine hohe Viskosität, nämlich von alkalifreien, hoch BaO-haltigen, borfreien oder -armen Gläsern, aufweisen, und daher schlecht läuterbar sind, können mit hohen Schmelzleistungen zu Gläsern mit hoher Glasqualität geläutert werden.

Die Erfindung soll anhand von Ausführungs- und Vergleichsbeispielen weiter erläutert werden.

Für sämtliche Beispiele gilt:
Das Gemenge wurde mittels einer Einlegemaschine kontinuierlich einer Schmelzwanne zugeführt, wobei die zugeführte Menge über den Füllstand des flüssigen Glases in der Wanne geregelt wurde. Dieser Vorgang des Einlegens ist bei der Beschreibung der Erfindung mit unter den Begriff Gemengezubereitung gefaßt. Rauhschmelze, Läutern und Abstehen des geschmolzenen Glases erfolgten in üblicher Weise durch Absenken der Temperatur. In einer Arbeitswanne und einer nachfolgenden Speiserrinne - hier ist auch ein Verteiler möglich - wurde das Glas durch Rühren thermisch und chemisch konditioniert.

Als Vergleichsbeispiel wurde ein Glas der Grundzusammensetzung (in Gew.-% auf Oxidbasis) 59,1 SiO₂; 4,6 B₂O₃; 14,5 Al₂O₃; 8,8 BaO; 10,3 CaO; 2,5 MgO; 0,18 Sb₂O₃ bei > 1630 °C geschmolzen und geläutert. Als Rohstoffe wurden Oxide und Carbonate eingesetzt. 1,5 Gew.-% des BaO wurden als Bariumnitrat eingesetzt.

Die Blasenanzahl des so hergestellten Glases beträgt ≥ 20/kg Glas und kann auch durch Verringerung der Schmelzleistung um 20% nicht herabgesetzt werden. Vor allem kleine und kleinste Blasen, die sogenannten Gispen, d. h. die Blasen, die auf dem Rohr eine ausgezogene Länge < 1 cm haben, stellen den häufigsten Glasfehler im Produkt dar.

Als Ausführungsbeispiel 1 (gemäß Anspruch 1 und 9) wurde ein Glas derselben Grundzusammensetzung wie das Vergleichsbeispiel jedoch ohne Sb₂O₃ und mit 0,2 Gew.-% SnO₂ hergestellt. Ansonsten wurden gleiche Rohstoffe verwendet.

Die Blasenanzahl konnte auf weniger als 10 pro kg Glas verringert werden, wodurch die Verbesserung der Läuterung durch SnO₂ deutlich wird. Daß neben wenigen größeren Blasen praktisch keine feinen Gispen mehr vorhanden waren, daß der gewünschte Effekt, nämlich die Verringerung der Feinblasigkeit zugunsten weniger großer Blasen, die leichter aufsteigen konnten und die Schmelze verlassen haben, eingetreten ist, ist ein weiteres Zeichen für die sehr gute Läuterwirkung

Als weiteres Beispiel (Ausführungsbeispiel 2, gemäß Anspruch 2 und 10) wurde ein Glas der Grundzusammensetzung (in Gew.-% auf Oxidbasis) 60,7 SiO₂; 0,3 B₂O₃; 16,5 Al₂O₃; 7,85 BaO; 13,5 CaO; 1,0 ZrO₂ hergestellt. 0,25 Gew.-% SnO₂ wurden zugesetzt. Die Schmelztemperatur betrug > 1640 °C, ansonsten entsprachen die Herstellungsbedingungen den oben genannten. Auch hier wurde unter vergleichbaren Schmelzbedingungen Glas mit < 10 Blasen/kg Glas erhalten.

## Patentansprüche

1. Verfahren zur Herstellung eines alkalifreien Aluminosilicatglases mit einem B₂O₃-Gehalt zwischen 0 und < 5 Gew.-% und einem BaO-Gehalt > 5,5 Gew.-% mit den Verfahrensschritten Gemengezubereitung unter Zusatz wenigstens eines Läutermittels, Schmelzen des Glases und Heißformgebung des Glases,
**dadurch gekennzeichnet,**
**dass** dem Glasgemenge 0,05 Gew.-% bis 1,0 Gew.-% SnO₂ zugesetzt wird und dass ein MoO₃-freies Aluminosilicatglas aus dem Zusammensetzungsbereich (in Gew.-% auf Oxidbasis)
| | |
|---|---|
| SiO₂ | 59 - 62 |
| Al₂O₃ | 13,5 - 15,5 |
| B₂O₃ | 3 - < 5 |
| MgO | 2,5 - 5 |
| CaO | 8,2 - 10,5 |
| BaO | 8,5 - 9,5 |
| ZrO₂ | 0 - 1,5 |
| TiO₂ | 0 - 0,5 |
| SnO₂ | 0,05 - 1 |
geschmolzen wird.

2. Verfahren zur Herstellung eines alkalifreien Aluminosilicatglases mit einem B₂O₃-Gehalt zwischen 0 und < 5 Gew.-% und einem BaO-Gehalt > 5,5 Gew.-% mit den Verfahrensschritten Gemengezubereitung unter Zusatz wenigstens eines Läutermittels, Schmelzen des Glases und Heißformgebung des Glases,
**dadurch gekennzeichnet,**
**dass** dem Glasgemenge 0,05 Gew.-% bis 1,0 Gew.-% SnO₂ zugesetzt wird und dass ein MoO₃-freies Aluminosilicatglas aus dem Zusammensetzungsbereich (in Gew.-% auf Oxidbasis)
| | |
|---|---|
| SiO₂ | > 58 - 62 |
| Al₂O₃ | 14 - 17,5 |
| B₂O₃ | 0,2 - 0,7 |
| MgO | 0 - 7 |
| CaO | 5,5 - 14 |
| SrO | 0 - 8 |
| BaO | 8 - 17 |
| ZrO₂ | 0 - 1,5 |
| TiO₂ | 0 - 0,5 |
| SnO₂ | 0,05 - 1 |
geschmolzen wird.

3. Verfahren nach Anspruch 2,
**dadurch gekennzeichnet,**
**dass** ein Aluminosilicatglas aus dem Zusammensetzungsbereich (in Gew.-% auf Oxidbasis)
| | |
|---|---|
| SiO₂ | > 58 - 62 |
| Al₂O₃ | 15 - 17,5 |
| B₂O₃ | 0,2 - 0,7 |
| MgO | 0 - < 1 |
| CaO | 5,5 - 14 |
| SrO | 0 - 8 |
| BaO | 6 - 10 |
| ZrO₂ | 0,05 - 1 |
| TiO₂ | 0 - 0,5 |
| SnO₂ | 0,05 - 1 |
geschmolzen sind.

4. Verfahren nach wenigstens einem der Ansprüche 1 bis 3,
**dadurch gekennzeichnet,**
**dass** dem Gemenge 0,1 Gew.-% bis 0,5 Gew.-% SnO₂ zugesetzt werden.

5. Verfahren nach wenigstens einem der Ansprüche 1 bis 4,
**dadurch gekennzeichnet,**
**dass** dem Gemenge keine Verdampfungsläutermittel zugesetzt werden.

6. Verfahren nach wenigstens einem der Ansprüche 1 bis 5,
**dadurch gekennzeichnet,**
**dass** dem Gemenge keine Zersetzungsläutermittel zugesetzt werden.

7. Verfahren nach wenigstens einem der Ansprüche 1 bis 6,
**dadurch gekennzeichnet,**
**dass** ein Aluminosilicatglas geschmolzen wird, das enthält:
| | |
|---|---|
| CeO₂ | 0 - 0,8 |
| WO₃ | 0-2 |
| V₂O₅ | 0 - 0,2 |
| MnO₂ | 0 - 0,2 |
| Fe₂O₃ | 0 - 0,5 |
| mit CeO₂ + WO₃ + V₂O₅ + MnO₂ + Fe₂O₃ | 0 - 3 |

8. Verfahren nach wenigstens einem der Ansprüche 1 bis 7,
**dadurch gekennzeichnet,**
**dass** ein Aluminosilicatglas geschmolzen wird, das bis auf unvermeidliche Verunreinigungen frei ist von As₂O₃, Sb₂O₃, CdO, PbO, Bi₂O₃.

9. Alkalifreies MoO₃-freies Aluminosilieatglas mit einer Zusammensetzung (in Gew.-% auf Oxidbasis)
| | |
|---|---|
| SiO₂ | 59 - 62 |
| Al₂O₃ | 13,5-15,5 |
| B₂O₃ | 3 - < 5 |
| MgO | 2,5 - 5 |
| CaO | 8,2 - 10,5 |
| BaO | 8,5 - 9,5 |
| ZrO₂, | 0 - 1,5 |
| TiO₂ | 0 - 0,5 |
| SnO₂ | 0,05 - 1 |

10. Alkalifreies MoO₃-freies Aluminosilicatglas mit einer Zusammensetzung (in Gew.-% auf Oxidbasis)
| | |
|---|---|
| SiO₂ | > 58 - 62 |
| Al₂O₃ | 14 - 17,5 |
| B₂O₃ | 0,2 - 0,7 |
| MgO | 0-7 |
| CaO | 5,5 - 14 |
| SrO | 0 - 8 |
| BaO | 6 - 17 |
| ZrO₂ | 0 - 1,5 |
| TiO₂ | 0 - 0,5 |
| SnO₂ | 0,05 -1 |

11. Aluminosilicatglas nach Anspruch 10,
**gekennzeichnet durch**
eine Zusammensetzung (in Gew.-% auf Oxidbasis)
| | |
|---|---|
| SiO₂ | > 58 - 62 |
| Al₂O₃ | 15 - 7,5 |
| B₂O₃ | 0,2 - 0,7 |
| MgO | 0 - < 1 |
| CaO | 5,5 -14 |
| SrO | 0 - 8 |
| BaO | 6 - 10 |
| ZrO₂ | 0,05 - 1 |
| TiO₂ | 0 - 0,5 |
| SnO₂ | 0,05 - 1 |

12. Aluminosilicatglas nach wenigstens einem der Ansprüche 9 bis 11,
**dadurch gekennzeichnet,**
**dass** es zusätlich enthält
| | |
|---|---|
| CeO₂ | 0 - 0,6 |
| WO₃ | 0 - 2 |
| V₂O₅ | 0 - 0,2 |
| MnO₂ | 0 - 0,2 |
| Fe₂O₃ | 0 - 0,5 |
| mit CeO₂ + WO₃ + V₂O₅ + MnO₂ + Fe₂O₃ | |

13. Aluminosilicatglas nach wenigstens einem der Ansprüche 9 bis 12,
**dadurch gekennzeichnet,**
**dass** es bis auf unvermeidliche Verunreinigungen frei ist von As₂O₃, Sb₂O₃, CdO, PbO, Bi₂O₃.

14. Verwendung eines Glases gemäß wenigstens einem der Ansprüche 9 bis 13 als Substratglas für die Dieplaytechnik

15. Verwendung eines Glases gemäß wenigstens einem der Ansprüche 9 bis 13 als Substratglas für die Photovoltaik

16. Verwendung eines Glases gemäß wenigstens einem der Ansprüche 9 bis 13 als Lampenkolbenglas für Halogenlampen

17. Verwendung eines Glases gemäß Anspruch 9 als Lampenkolbenglas für Halogenlampen mit Kolbentemperaturen von maximal 660 °C.

18. Verwendung eines Glases gemäß Anspruch 10 oder 11 als Lampenkolbenglas für Halogenlampen mit Kolbentemperaturen von mehr als 660 °C.

## Claims

1. Process for producing an alkali-free aluminosilicate glass having a B₂O₃ content between 0 and < 5% by weight and a BaO content > 5.5% by weight, comprising the steps of batch formulation with the addition of at least one fining agent, melting of the glass and hot forming of the glass,
**characterized**
**in that** from 0.05% by weight to 1.0% by weight of SnO₂ is added to the batch and in that an MoO₃-free aluminosilicate glass with a composition from the following range (in % by weight based on oxide):
| | |
|---|---|
| SiO₂ | 59-62 |
| Al₂O₃ | 13.5-15.5 |
| B₂O₃ | 3-< 5 |
| MgO | 2.5-5 |
| CaO | 8.2-10.5 |
| BaO | 8.5-9.5 |
| ZrO₂ | 0-1.5 |
| TiO₂ | 0-0.5 |
| SnO₂ | 0.05-1 |
is melted.

2. Process for producing an alkali-free aluminosilicate glass having a B₂O₃ content between 0 and < 5% by weight and a BaO content > 5.5% by weight, comprising the steps of batch formulation with the addition of at least one fining agent, melting of the glass and hot forming of the glass,
**characterized**
**in that** from 0.05% by weight to 1.0% by weight of SnO₂ is added to the batch and in that an MoO₃-free aluminosilicate glass with a composition from the following range (in % by weight based on oxide):
| | |
|---|---|
| SiO₂ | >58-62 |
| Al₂O₃ | 14-17.5 |
| B₂O₃ | 0-1 |
| MgO | 0-7 |
| CaO | 5.5-14 |
| SrO | 0-8 |
| BaO | 6-17 |
| ZrO₂ | 0-1.5 |
| TiO₂ | 0-0.5 |
| SnO₂ | 0.05-1 |
is melted.

3. Process according to Claim 2,
**characterized**
**in that** an aluminosilicate glass with a composition from the following range (in % by weight based on oxide):
| | |
|---|---|
| SiO₂ | >58-62 |
| Al₂O₃ | 15-17.5 |
| B₂O₃ | 0.2-0.7 |
| MgO | 0-< 1 |
| CaO | 5.5-14 |
| SrO | 0-8 |
| BaO | 6-10 |
| ZrO₂ | 0.05-1 |
| TiO₂ | 0-0.5 |
| SnO₂ | 0.05-1 |
is melted.

4. Process according to at least Claims 1 to 3,
**characterized in that**
from 0.1% by weight to 0.5% by weight of SnO₂ is added to the batch.

5. Process according to at least one of Claims 1 to 4,
**characterized in that**
no evaporation fining agents are added to the batch.

6. Process according to at least one of Claims 1 to 5,
**characterized in that**
no decomposition fining agents are added to the batch.

7. Process according to at least one of Claims 1 to 6,
**characterized in that**
an aluminosilicate glass is melted which contains:
| | |
|---|---|
| CeO₂ | 0-0.6 |
| WO₃ | 0-2 |
| V₂O₅ | 0-0.2 |
| MnO₂ | 0-0.2 |
| Fe₂O₃ | 0-0.5 |
| where CeO₂+WO₃+V₂O₅+MnO₂+Fe₂O₃ | 0-3 |

8. Process according to at least one of Claims 1 to 7
**characterized in that**
an aluminosilicate glass is melted which except for unavoidable impurities is free from As₂O₃, Sb₂O₃, CdO, PbO, Bi₂O₃.

9. Alkali-free MoO₃-free aluminosilicate glass having a composition as follows (in % by weight based on oxide):
| | |
|---|---|
| SiO₂ | 59-62 |
| Al₂O₃ | 13.5-15.5 |
| B₂O₃ | 3-< 5 |
| MgO | 2.5-5 |
| CaO | 8.2-10.5 |
| BaO | 8.5-9.5 |
| ZrO₂ | 0-1.5 |
| TiO₂ | 0-0.5 |
| SnO₂ | 0.05-1 |

10. Alkali-free MoO₃-free aluminosilicate glass having a composition as follows (in % by weight based on oxide):
| | |
|---|---|
| SiO₂ | > 58-62 |
| Al₂O₃ | 14-17.5 |
| B₂O₃ | 0.2-07 |
| MgO | 0-7 |
| CaO | 5.5-14 |
| SrO | 0-8 |
| BaO | 6-17 |
| ZrO₂ | 0-1.5 |
| TiO₂ | 0-0.5 |
| SnO₂ | 0.05-1 |

11. Aluminosilicate glass according to Claim 10,
**characterized by**
a composition as follows (in % by weight based on oxide):
| | |
|---|---|
| SiO₂ | > 58-62 |
| Al₂O₃ | 15-17.5 |
| B₂O₃ | 0.2-0.7 |
| MgO | 0-< 1 |
| CaO | 5.5-14 |
| SrO | 0-8 |
| BaO | 6-10 |
| ZrO₂ | 0.05-1 |
| TiO₂ | 0-0.5 |
| SnO₂ | 0.05-1 |

12. Aluminosilicate glass according to at least one of Claims 9 to 11,
**characterized in that**
it further comprises
| | |
|---|---|
| CeO₂ | 0-0.6 |
| WO₃ | 0-2 |
| V₂O₅ | 0-0.2 |
| MnO₂ | 0-0.2 |
| Fe₂O₃ | 0-0.5 |
| where CeO₂+WO₃+V₂O₅+MnO₂+Fe₂O₃ | 0-3 |

13. Aluminosilicate glass according to at least one of Claims 9 to 12,
**characterized in that**
except for unavoidable impurities it is free from As₂O₃, Sb₂O₃, CdO, PbO, Bi₂O₃.

14. Use of a glass according to at least one of Claims 9 to 13 as substrate glass for display technology.

15. Use of a glass according to at least one of Claims 9 to 13 as substrate glass for photovoltaics.

16. Use of a glass according to at least one of Claims 9 to 13 as lamp bulb glass for halogen lamps.

17. Use of a glass according to Claim 9 as lamp bulb glass for halogen lamps with bulb temperatures of not more than 660°C.

18. Use of a glass according to Claim 10 or 11 as lamp bulb glass for halogen lamps with bulb temperatures of more than 660°C.

## Revendications

1. Procédé de production d'un verre d'aluminosilicate sans alcali présentant une teneur en B₂O₃ comprise entre 0 et < 5 % en poids et une teneur en BaO > 5,5 % en poids, comprenant les étapes de procédé de formulation de mélange par addition d'au moins un agent d'affinage, fusion du verre et formage à chaud du verre,
**caractérisé en ce que**
de 0,05 % en poids à 1,0 % en poids de SnO₂ est ajouté au mélange du verre et **en ce que** un verre d'aluminosilicate sans MoO₃ avec une plage de composition (en % en poids par rapport à l'oxyde)
| | |
|---|---|
| SiO₂ | 59-62 |
| Al₂O₃ | 13,5-15,5 |
| B₂O₃ | 3-< 5 |
| MgO | 2,5-5 |
| CaO | 8,2-10,5 |
| BaO | 8,5-9,5 |
| ZrO₂ | 0-1,5 |
| TiO₂ | 0-0,5 |
| SnO₂ | 0,05-1 |
est fondu.

2. Procédé de production d'un verre d'aluminosilicate sans alcali présentant une teneur en B₂O₃ comprise entre 0 et < 5 % en poids et une teneur en BaO > 5,5 % en poids, comprenant les étapes de procédé de formulation de mélange par addition d'au moins un agent d'affinage, fusion du verre et formage à chaud du verre,
**caractérisé en ce que**
de 0,05 % en poids à 1,0 % en poids de SnO₂ est ajouté au mélange du verre et **en ce que** un verre d'aluminosilicate sans MoO₃ avec une plage de composition (en % en poids par rapport à l'oxyde)
| | |
|---|---|
| SiO₂ | > 58-62 |
| Al₂O₃ | 14-17,5 |
| B₂O₃ | 0-1 |
| MgO | 0-7 |
| CaO | 5,5-14 |
| SrO | 0-8 |
| BaO | 6-17 |
| ZrO₂ | 0-1,5 |
| TiO₂ | 0-0,5 |
| SnO₂ | 0,05-1 |
est fondu.

3. Procédé selon la revendication 2,
**caractérisé en ce que**
un verre d'aluminosilicate avec une plage de composition (en % en poids par rapport à l'oxyde)
| | |
|---|---|
| SiO₂ | > 58-62 |
| Al₂O₃ | 15-17,5 |
| B₂O₃ | 0,2-0,7 |
| MgO | 0-< 1 |
| CaO | 5,5-14 |
| SrO | 0-8 |
| BaO | 6-10 |
| ZrO₂ | 0,05-1 |
| TiO₂ | 0-0,5 |
| SnO₂ | 0,05-1 |
est fondu.

4. Procédé selon au moins l'une des revendications 1 à 3,
**caractérisé en ce que**
de 0,1 % en poids à 0,5 % en poids de SnO₂ est ajouté au mélange.

5. Procédé selon au moins l'une des revendications 1 à 4,
**caractérisé en ce que**
aucun agent d'affinage par évaporation n'est ajouté au mélange.

6. Procédé selon au moins l'une des revendications 1 à 5,
**caractérisé en ce que**
aucun agent d'affinage par décomposition n'est ajouté au mélange.

7. Procédé selon au moins l'une des revendications 1 à 6,
**caractérisé en ce que**
un verre d'aluminosilicate est fondu, lequel contient :
| | |
|---|---|
| CeO₂ | 0-0,6 |
| WO₃ | 0-2 |
| V₂O₅ | 0-0,2 |
| MnO₂ | 0-0,2 |
| Fe₂O₃ | 0-0,5 |
| avec CeO₂+WO₃+V₂O₅+MnO₂+Fe₂O₃ | 0-3 |

8. Procédé selon au moins l'une des revendications 1 à 7,
**caractérisé en ce que**
un verre d'aluminosilicate est fondu, lequel, mis à part les impuretés inévitables, est exempt de As₂O₃, Sb₂O₃, CdO, PbO, Bl₂O₃.

9. Verre d'aluminosilicate sans alcali et sans MoO₃ de composition (en % en poids par rapport à l'oxyde)
| | |
|---|---|
| SiO₂ | 59-62 |
| Al₂O₃ | 13,5-15,5 |
| B₂O₃ | 3-< 5 |
| MgO | 2,5-5 |
| CaO | 8,2-10,5 |
| BaO | 8,5-9,5 |
| ZrO₂ | 0-1,5 |
| TiO₂ | 0-0,5 |
| SnO₂ | 0,05-1 |

10. Verre d'aluminosilicate sans alcali et sans MoO₃ de composition (en % en poids par rapport à l'oxyde)
| | |
|---|---|
| SiO₂ | > 58-62 |
| Al₂O₃ | 14-17,5 |
| B₂O₃ | 0,2-0,7 |
| MgO | 0-7 |
| CaO | 5,5-14 |
| SrO | 0-8 |
| BaO | 6-17 |
| ZrO₂ | 0-1,5 |
| TiO₂ | 0-0,5 |
| SnO₂ | 0,05-1 |

11. Verre d'aluminosilicate selon la revendication 10,
**caractérisé par**
une composition (en % en poids par rapport à l'oxyde)
| | |
|---|---|
| SiO₂ | > 58-62 |
| Al₂O₃ | 15-17,5 |
| B₂O₃ | 0,2-0,7 |
| MgO | 0-< 1 |
| CaO | 5,5-14 |
| SrO | 0-8 |
| BaO | 6-10 |
| ZrO₂ | 0,05-1 |
| TiO₂ | 0-0,5 |
| SnO₂ | 0,05-1 |

12. Verre d'aluminosilicate selon au moins l'une des revendications 9 à 11,
**caractérisé en ce que**
il contient en outre
| | |
|---|---|
| CeO₂ | 0-0,6 |
| WO₃ | 0-2 |
| V₂O₅ | 0-0,2 |
| MnO₂ | 0-0,2 |
| Fe₂O₃ | 0-0,5 |
| avec CeO₂+WO₃+V₂O₅+MnO₂+Fe₂O₃ | 0-3 |

13. Verre d'aluminosilicate selon au moins l'une des revendications 9 à 12,
**caractérisé en ce que**
mis à part les impuretés inévitables, il est exempt de As₂O₃, Sb₂O₃, CdO, PbO et Bi₂O₃.

14. Utilisation d'un verre selon au moins l'une des revendications 9 à 13 en tant que verre substrat pour la technologie d'affichage.

15. Utilisation d'un verre selon au moins l'une des revendications 9 à 13 en tant que verre substrat pour le photovoltaïque.

16. Utilisation d'un verre selon au moins l'une des revendications 9 à 13 en tant que verre d'ampoules électriques pour les lampes halogène.

17. Utilisation d'un verre selon la revendication 9 en tant que verre d'ampoules électriques pour des lampes halogène avec des températures d'ampoule d'au plus 660°C.

18. Utilisation d'un verre selon la revendication 10 ou 11 en tant que verre d'ampoules électriques pour des lampes halogène avec des températures d'ampoule supérieures à 660°C.
